# DEMANDE DE BREVET EUROPEEN

(11) **EP 0 713 115 A1**
(43) Date de publication de la demande: **22.05.1996**
(21) Numéro de dépôt: 95402592.0
(22) Date de dépôt: 17.11.1995
(51) Int. Cl.: G02B 6/44

(54) **Procédé de fabrication d'un module cylindrique de fibres optiques**

(30) Priorité: 21.11.1994 FR 9413902
(71) Demandeur: ALCATEL CABLE, F-92100 Clichy (FR)
(72) Inventeur: Gaillard, Pierre, F-95000 Cergy (FR)
(74) Mandataire: Pothet, Jean Rémy Emile Ludovic

(57) **Abrégé**

La présente invention concerne un procédé de fabrication d'un module (2) de fibres optiques comprenant une pluralité de fibres optiques (3) assemblées et maintenues entre elles par une résine souple (4), ce procédé comportant une opération (102) d'application de la résine souple à l'ensemble des fibres disposées parallèlement les unes aux autres de sorte que leurs axes longitudinaux appartiennent sensiblement à un même plan,
et étant caractérisé en ce que l'application (102) est suivie des opérations suivantes :
- réticulation partielle (103) de la résine, pour obtenir un ruban,
- enroulement (104) du ruban en rapprochant ses bords longitudinaux, de manière à lui donner une forme sensiblement cylindrique,
- réticulation complète (105) de la résine pour maintenir la forme cylindrique de l'enroulement.

## Description

La présente invention conceme un procédé de fabrication d'un module cylindrique de fibres optiques, destiné à être utilisé dans un câble à fibres optiques.

Plus particulièrement, elle concerne un procédé de fabrication d'un module de fibres optiques tel que décrit dans le document FR-2 693 560. Un tel module de fibres optiques se compose d'un ensemble de fibres optiques assemblées et maintenues entre elles par une résine souple, de manière à définir un ruban qui est enroulé de sorte que ses bords longitudinaux se touchent. Après dégainage d'un tel module, on a directement à sa disposition un ruban de fibres optiques que l'on peut connecter de manière classique à un autre ruban.

Des modules de ce type sont décrits également dans les documents FR-2 319 912, ou JP-40/98210.

Pour la fabrication de ces modules, on applique une résine souple aux fibres disposées parallèlement les unes aux autres de sorte que leurs axes longitudinaux appartiennent sensiblement à un même plan, puis on réticule cette résine, et enfin, on enroule le ruban en rapprochant ses bords longitudinaux de manière à lui donner une forme sensiblement cylindrique, éventuellement autour d'un élément de renfort central.

Ce procédé n'est pas satisfaisant.

En effet, il est difficile de donner au ruban une forme cylindrique, et surtout de maintenir cette dernière, la résine réticulée et donc durcie s'opposant non seulement à l'enroulement mais également au maintien sous forme cylindrique, et tendant à redonner au ruban une forme plus ou moins plane.

Le but de la présente invention est de remédier à ce problème en mettant au point un procédé facilitant la réalisation des modules cylindriques de fibres optiques du type précédent.

La présente invention propose à cet effet un procédé de fabrication d'un module de fibres optiques comprenant une pluralité de fibres optiques assemblées et maintenues entre elles par une résine souple, ledit procédé comportant une opération d'application de ladite résine souple à l'ensemble desdites fibres disposées parallèlement les unes aux autres de sorte que leurs axes longitudinaux appartiennent sensiblement à un même plan,
et étant caractérisé en ce que ladite application est suivie des opérations suivantes :
- réticulation partielle de ladite résine, pour obtenir un ruban,
- enroulement dudit ruban en rapprochant ses bords longitudinaux, de manière à lui donner une forme sensiblement cylindrique,
- réticulation complète de ladite résine pour maintenir la forme cylindrique dudit enroulement.

Le fait de séparer en deux étapes la réticulation de la résine permet de faciliter l'opération d'enroulement, la résine n'étant pas encore tout à fait durcie pendant cette opération et donc plus souple et facile à enrouler, et de faciliter le maintien du ruban enroulé sous une forme bien cylindrique dans le câble, en terminant le durcissement après l'enroulement.

D'autres caractéristiques et avantages de la présente invention apparaîtront dans la description suivante d'un procédé de fabrication selon l'invention, donnée à titre illustratif et nullement limitatif.

Dans les figures suivantes :
- la figure 1A montre en perspective un module de fibres optiques à l'état déroulé,
- la figure 1B montre en perspective un module de fibres optiques à l'état enroulé,
- la figure 2 illustre très schématiquement un dispositif permettant de fabriquer le module de fibres optiques de la figure 1B selon le procédé de l'invention.

Dans toutes ces figures, les éléments communs portent les mêmes numéros de référence.

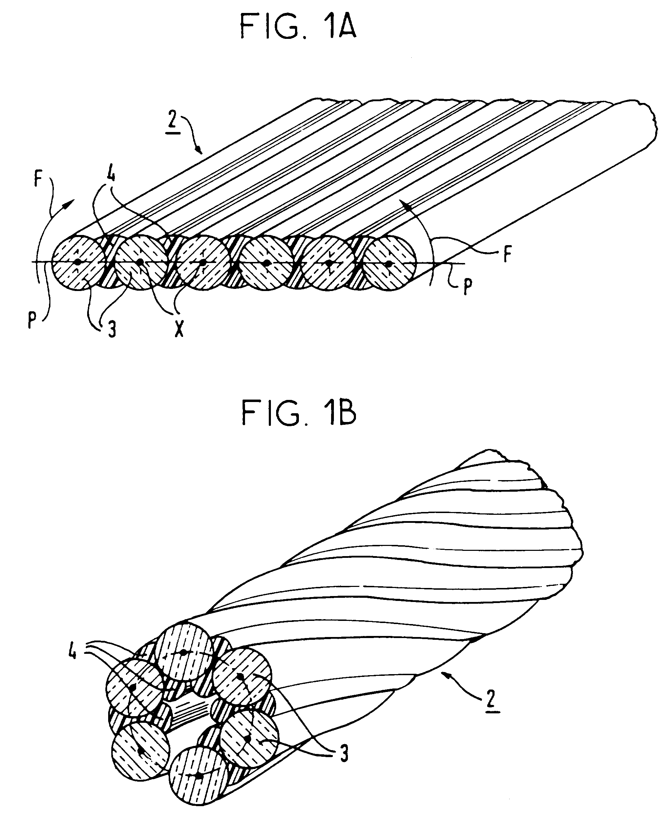

On voit en figure 1, à l'état déroulé, un module de fibres optiques 2 se composant de plusieurs fibres optiques 3 (six dans l'exemple représenté) assemblées et maintenues entre elles au moyen d'une résine souple 4 (par exemple de module d'élasticité inférieur à 12000 psi), ayant de préférence un coefficient de dilatation thermique voisin de celui des fibres optiques 3.

Plus précisément, dans le module 2 déroulé, toutes les fibres optiques 3 sont disposées parallèlement les unes aux autres, avec leurs axes longitudinaux X appartenant tous sensiblement à un même plan référencé P sur la figure 1A.

La figure 1B montre le module 2 à l'état enroulé, obtenu à partir de la figure 1A en rapprochant ses bords latéraux dans le sens des flèches F. On obtient ainsi un module 2 de forme sensiblement cylindrique.

Le module 2 peut être enroulé en long, c'est-à-dire de sorte que ses fibres optiques 3 restent parallèles entre elles et à un axe central commun, ou bien également sur lui-même en hélice, ainsi que représenté en figure 1B. Ceci a pour avantage de conférer au module 2 une plus grande souplesse et une meilleure tenue en flexion. De plus, un tel enroulement conserve mieux sa forme cylindrique qu'un enroulement en long.

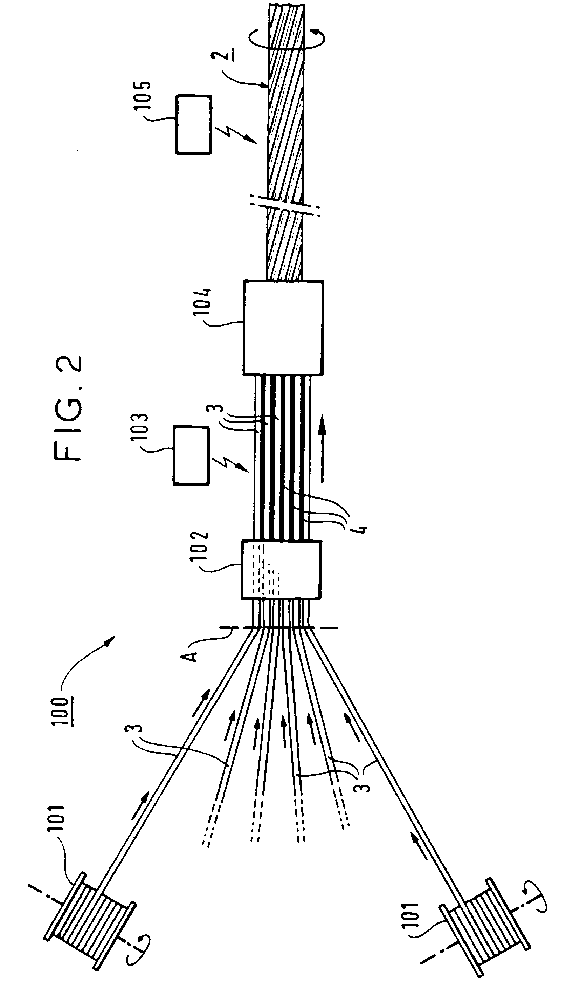

On a représenté très schématiquement en figure 2 un dispositif 100 permettant de fabriquer, selon l'invention, le module 2 de la figure 1B.

Le dispositif 100 comporte une pluralité de bobines 101 (seules deux d'entre elles ont été représentées en figure 2 pour des raisons de clarté) pour stocker et dévider les fibres optiques 3 indépendamment les unes des autres. Les fibres 3 sont amenées parallèlement les unes aux autres et sensiblement dans un même plan P au niveau d'une section A du dispositif 100. Elles traversent ensuite ainsi une filière d'enduction 102 permettant de leur appliquer la résine 4 non réticulée.

L'ensemble de fibres 3 ainsi revêtu est ensuite exposé à un rayonnement ultraviolet assurant une réticulation partielle de la résine 4, au moyen d'un four de réticulation 103, de sorte que la résine 4 conserve une certaine souplesse tout en assurant déjà un maintien des fibres optiques 3.

Le ruban ainsi formé traverse alors un dispositif 104 permettant de l'enrouler sur lui-même en hélice, de manière à obtenir une forme sensiblement cylindrique, puis défile en regard d'un second four 105, identique au four 103, assurant la réticulation complète de la résine 4, toujours au moyen d'un rayonnement ultraviolet, pour réaliser le maintien de la forme cylindrique du module 2.

Le fait d'effectuer la réticulation en deux étapes, avant et après l'enroulement, facilite l'opération d'enroulement et améliore la tenue du module 2 à l'état enroulé.

Le module 2 ainsi préparé peut ensuite être utilisé dans tout type de câble optique.

Bien entendu, la présente invention n'est pas limitée au mode de réalisation qui vient d'être décrit.

Ainsi, la résine 4 non réticulée peut être appliquée de manière asymétrique par rapport au plan P.

Par ailleurs, le procédé selon l'invention permet de réaliser des modules comportant ou non un élément de support central.

L'enroulement en hélice du ruban 2 peut être effectué autour d'un outillage de maintien qui est éliminé une fois l'enroulement terminé. Il peut être obtenu par exemple au moyen d'une bobine de réception tournante.

D'autre part, la résine utilisée peut être de tout type connu, du moment qu'elle présente une relative souplesse.

Le dispositif de fabrication représenté peut être installé verticalement ou horizontalement.

Enfin, on pourra remplacer tout moyen par un moyen équivalent sans sortir du cadre de la présente invention.

## Revendications

1. Procédé de fabrication d'un module (2) de fibres optiques comprenant une pluralité de fibres optiques (3) assemblées et maintenues entre elles par une résine souple (4), ledit procédé comportant une opération (102) d'application de ladite résine souple à l'ensemble desdites fibres disposées parallèlement les unes aux autres de sorte que leurs axes longitudinaux appartiennent sensiblement à un même plan,
et étant caractérisé en ce que ladite application (102) est suivie des opérations suivantes :
- réticulation partielle (103) de ladite résine, pour obtenir un ruban,
- enroulement (104) dudit ruban en rapprochant ses bords longitudinaux, de manière à lui donner une forme sensiblement cylindrique,
- réticulation complète (105) de ladite résine pour maintenir la forme cylindrique dudit enroulement.

2. Procédé selon la revendication 1, caractérisé en ce que ladite application est effectuée de manière asymétrique par rapport audit plan.

3. Procédé selon l'une des revendications 1 ou 2, caractérisé en ce que ledit ruban est enroulé sur lui-même en hélice.

4. Procédé selon l'une des revendications 1 à 3 caractérisé en ce que ledit ruban est enroulé autour d'un élément de support central.

5. Procédé selon l'une des revendications 1 à 4, caractérisé en ce que ladite résine a un module d'élasticité inférieur à 12000 psi et un coefficient d'expansion thermique voisin de celui desdites fibres optiques.
